# EUROPÄISCHE PATENTSCHRIFT

(11) **EP 0 660 973 B1**
(45) Veröffentlichungstag und Bekanntmachung des Hinweises auf die Patenterteilung: **04.12.1996**
(21) Anmeldenummer: 93918938.7
(22) Anmeldetag: 03.09.1993
(51) Int. Cl.: H02H 7/26

(54) **SCHUTZAUSLÖSEVERFAHREN**
PROTECTION TRIGGERING PROCESS
PROCEDE DE DECLENCHEMENT DE PROTECTION

(30) Priorität: 14.09.1992 DE 4230692
(43) Veröffentlichungstag der Anmeldung: 05.07.1995
(73) Patentinhaber: SIEMENS AKTIENGESELLSCHAFT, 80333 München (DE)
(72) Erfinder: KREBS, Rainer, D-91052 Erlangen (DE)
(86) Internationale Anmeldenummer: DE9300799
(87) Internationale Veröffentlichungsnummer: WO9407290

(56) Entgegenhaltungen:
- EP-A- 0 284 546
- PROCEEDINGS OF THE 25TH UNIVERSITIES POWER ENGINEERING CONFERENCE, September 1990, Aberdeen, Seiten 155-158; P.J. MOORE : 'Least mean squares adaptive filtering approach to digital protection relaying'

## Beschreibung

Die Erfindung betrifft ein Schutzauslöseverfahren und eine Signalüberwachungseinrichtung gemäß Oberbegriff des Anspruchs 1 beziehungsweise des Anspruchs 6.

Zur Sicherung des Betriebs von Energieversorgungsleitungen werden sogenannte Schutzgeräte eingesetzt, die Leitungen auf Fehler überwachen. Ein derartiges Schutzgerät ist beispielsweise der Distanzschutz. Der Distanzschutz mißt die Impedanz der Leitung und überwacht diese auf Unterschreiten eines vorgebbaren Impedanzwertes. Eine Unterschreitung tritt beispielsweise bei Kurzschlüssen auf.

Ein Problem von modernen Distanzschutzgeräten in digitaler Ausführung liegt darin, daß Filter mit fester Fensterbreite und festem Auslösekriterium verwendet werden. Dabei ergibt sich der Widerspruch der beiden Kriterien "hohe Genauigkeit der Impedanzbestimmung" und "geringe Kommandozeit für den Aus-Befehl". Soll nämlich bei fester technisch sinnvoller Abtastfrequenz ein Schutzalgorithmus schnell arbeiten, so müssen digitale Filter mit wenigen Koeffizienten verwendet werden. Diese weisen bei auftretenden Störgrößen große Fehler bei der Impedanzbestimmung auf, was zu einer Störung der Selektivität führt. Soll hingegen ein Schutzalgorithmus möglichst selektiv arbeiten, so müssen Filter mit großer Koeffizientenanzahl zur Störgrößendämpfung verwendet werden. Der Schutzalgorithmus weist dann jedoch relativ große Kommandozeiten auf. Diese Problematik ist beispielsweise aus "Proceedings of the 25th Universities Power Engineering Conference, Aberdeen, UK, 12.-14.09.1990, Seiten 155 bis 158 bekannt.

Aus der EP 0 284 546 ist ein Prüfverfahren bekannt, bei dem Filter mit fester Fensterbreite zur Anwendung kommen.

Ein Schutzauslöseverfahren und eine Signalüberwachungsvorrichtung gemäß den Oberbegriffen von Anspruch 1 und 6 ist aus Elektric, 1990, Heft 7, Seiten 249 bis 253, bekannt.

Der Erfindung liegt die Aufgabe zugrunde, ein Signalüberwachungsverfahren anzugeben, bei dem die obengenannten Nachteile vermieden werden.

Ausgehend vom Stand der Technik ging der Erfinder einen neuen Weg, indem er auf Meßwertfilter mit festen Filtereigenschaften verzichtete. Er stellte nämlich fest, daß für bestimmte Fehler auch sehr ungenaue Filter völlig ausreichend sind, während nur in einigen Fehlerfällen hochgenaue Filter benötigt werden.

Die Lösung der Aufgabe gelingt mit einem Verfahren gemäß den Merkmalen des Anspruchs 1 sowie mit einer Überwachungseinrichtung nach Anspruch 6. Auf diese Weise steht ein signalüberwachungsverfahren zur Verfügung, das sich der aktuellen Fehlersituation des Signals anpaßt. Dadurch können einfache Fehler, die nur eine grobe Filterfunktion benötigen, in kürzester Zeit erkannt werden und zu einer Auslösung führen, während Fehler, die eine genauere Filterfunktion erfordern, eine intensivere Filterbearbeitung erfahren. Das Verfahren erzielt in den allermeisten Fällen verbesserte Auslösezeiten gegenüber dem Stand der Technik.

Bevorzugt wird vom Ausgangssignal ein Unschärfebereich abgeleitet, der für die Auslöseentscheidung dient, wobei insbesondere die zeitliche Änderung des Ausgangssignals verwendet wird. Dadurch kann eine weitere Verringerung der Auslösezeiten erzielt werden. Als Unschärfebereich ist dabei die Wahrscheinlichkeit zu verstehen, wie genau die ermittelte Impedanz (Meßwertimpedanz) mit der tatsächlichen Leitungsimpedanz (Meßimpedanz) übereinstimmt. Der Unschärfebereich kann abhängig sein von der Filtereigenschaft und/oder einer Störgrößenhöhe und dient dabei im Sinne einer bekannten Meßungenauigkeit. Weist beispielsweise das Ausgangssignal einen relativ großen Unschärfebereich auf, wobei der gesamte Unschärfebereich ein Auslösekriterium erfüllen muß, so kann besonaers schnell eine positive Auslöseentscheidung getroffen werden. Bei einer negativen Auslöseentscheidung wird das Filter so lange verbessert, bis der Unschärfebereich eingeengt ist und eine klare Auslöseentscheidung getroffen werden kann. Für diese Funktion kann in vorteilhafter Weise eine Fuzzy-Logik verwendet werden, wobei eine Gewichtung von Störgrößen zur Bildung des Unschärfebereichs dienen kann. Die Verbesserung der Filtereigenschaft kann dabei fortlaufend automatisch erfolgen.

Es ist von Vorteil, wenn für die Auslöseentscheidung ein Auslösebereich mit vorgebbaren Grenzen vorgegeben werden kann. Dadurch ist das Verfahren auf spezielle Fehlerfälle anpaßbar. Insbesondere kann das Verfahren zur Überwachung von Strom, Spannung und insbesondere von einer Impedanz dienen. Die Signale können dabei als Wechselsignale ausgebildet sein. Eine bevorzugte Anwendung findet beim Distanzschutz statt, wobei dann ein Impedanzsignal überwacht wird. Das Verfahren hat bei dieser Anwendung in Versuchen sehr gute Ergebnisse erzielt, wobei nicht nur die Auslöse- oder Kommandozeiten des Distanzschutzes verbessert werden konnten, sondern auch dessen Genauigkeit.

Alternativ kann auch eine Unschärfe der vorgebbaren Grenzen gebildet werden. Gegebenenfalls kann diese Möglichkeit zu einer Vereinfachung des Verfahrens bei Ausbildung als Programm in einem Rechner führen. Das steuerbare Filter kann auch mehrere Filtertypen umfassen, so daß je nach erkannten Störgrößen das für den Fehlerfall optimalste Filter ausgewählt wird. Das Filter kann dabei auch selbst-aufbauend oder selbstverbessernd im Sinne einer zyklischen Verbesserung ausgebildet sein. Auf diese Weise ist eine Rückkopplung von einer Auslöselogik nicht nötig. Das Filter ist bevorzugt nach Anspruch 4 bzw. Anspruch 9 ausgebildet.

Die Ausbildung der Überwachungsvorrichtung ist besonders einfach bei Verwendung eines digitalen Rechners. Die bevorzugte Anwendung ist als Distanzschutzgerät für Energieversorgungsleitungen gegeben. Weitere Vorteile der Erfindung ergeben sich aus dem oben gesagten, den übrigen Ansprüchen, sowie aus der Beschreibung.

Die Erfindung wird nachfolgend anhand von Ausführungsvarianten beispielhaft näher erläutert. Es zeigen:
FIG 1 ein Blockschaltbild der Überwachungsvorrichtung;
FIG 2 ein Detailblockschaltbild;
FIG 3, 4 und 5 Beispiele von Auslösepolygone;
FIG 6 ein Auslösediagramm nach dem Stand der Technik und
FIG 7 ein Auslösediagramm nach dem neuen Verfahren.

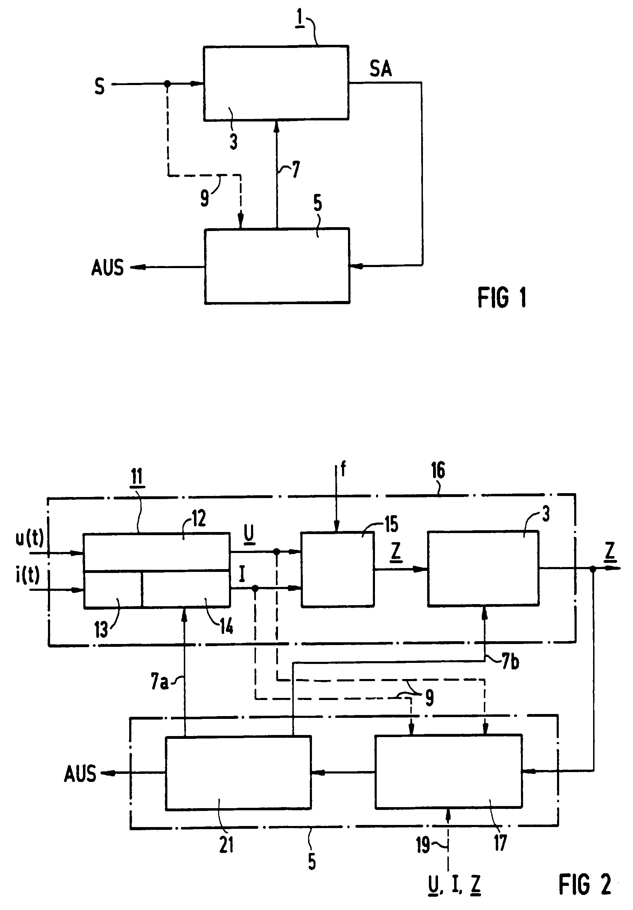

In dem Blockschaltbild gemäß FIG 1 ist eine Anordnung, insbesondere eine Signalüberwachungseinrichtung 1 gezeigt, bei der ein zeitveränderliches Signal S einer Filtervorrichtung, insbesondere einem Filter 3, zugeführt wird. Das Ausgangssignal SA wird einer Auslöselogik 5 zugeführt, welche in Abhängigkeit vom Ausgangssignal SA eine Auslöseentscheidung trifft und im Fehlerfall ein Aus-Signal erzeugt und abgibt. Das Aus-Signal kann dann einer weiteren Bearbeitung unterzogen oder als Eingangssignal für ein Schaltglied, z.B. einem Leistungsschalter, dienen.

Das Filter 3 ist dabei als veränderliches Filter, z.B. als Aufbaufilter oder als Kombination von mehreren Filtertypen, die parallel oder seriell geschaltet sein können, ausgebildet. Das Filter 3 weist dabei eine optimierende Funktion auf, d.h., daß zeitabhängig die Filterfunktion verbessert wird. Dies kann beispielsweise durch Ausgestaltung des Filter 3 als Aufbaufilter oder durch Umschaltung verschiedener Filtertypen erfolgen. Auf diese Weise ist die Möglichkeit eines sich ändernden und qulitativ verbessernden Ausgangssignals SA gegeben. Aufbaufilter sind auch unter dem Begriff FIR-Filter bekannt.

In der Auslöselogik 5 wird in Abhängigkeit vom Ausgangssignal SA eine Auslöseentscheidung getroffen. Dazu wird zunächst ein Unschärfebereich gebildet. Der Unschärfebereich enthält eine Aussage über die Wahrscheinlichkeit, wie genau das momentane Ausgangssignal SA mit dem tatsächlichen zu bestimmenden Wert übereinstimmt. Dabei kann ein Unschärfebereich zum Ausgangssignal SA oder zu einer vorgegebenen Grenze eines Auslösebereichs der Auslöselogik 5 gebildet werden. Hieraus ergibt sich, daß beim Auftreten eines Fehlers im Signal S zunächst ein relativ großer Unschärfebereich aufgrund einer zwar nicht so guten, aber schnellen Filtereigenschaft des Filters 3 besteht. Wird das Auslösekriterium trotz der großen Unschärfe erfüllt, so erfolgt eine sofortige Auslösung. Die Wahrscheinlichkeit, daß ein Fehler innerhalb der vorgegebenen Grenzen liegt, ist gegeben.

Liegt jedoch eine Überschneidung zwischen Unschärfebereich und Auslösekriterien vor, so wird solange abgewartet, bis eine Verbesserung des Filters 3 eine eindeutige Entscheidung zuläßt. Dazu kann auch von der Auslöselogik 5 über einen Signalweg 7 ein Steuersignal an das Filter 3 zur Verbesserung der Filterfunktion gegeben werden. Auf diese Weise ist ein Regelkreis gebildet. Mit der strichlinierten Linie 9 ist angedeutet, daß das Signal S auch direkt zur Musterekennung von Störgrößen an die Auslöselogik 5 gegeben werden kann (ggf. unter Zwischenschaltung einer weiteren Verarbeitung).

FIG 2 zeigt eine detailiertere Darstellung des Verfahrens als Blockschaltbild, wie es bevorzugt bei Distanzschutzgeräten Anwendung finden kann. Dazu werden zunächst ein Spannungssingal u und ein Stromsignal i einem Meßwertfilter 11 zugeführt. Das Meßwertfilter 11 umfaßt ein Spannungsfilter 12, ein erstes Filter für den Strom, z.B. ein Exponentialfilter 13, und ein weiteres Stromfilter 14. Die Strom- und Spannungsfilter 14, 12 sind als veränderliche Filter, insbesondere als Aufbaufilter, ausgebildet. Die erhaltenen Signale U, I werden dann zusammen mit einem Frequenzsignal f einem Impedanzbildner 15 zugeführt. Dessen Ausgangssignal wird dann über das Filter 3 der Auslöselogik 5 zugeführt. Die Anordnung der Bausteine 11, 15 und 3 bilden dabei eine Filtervorrichtung 16.

In einem Detektor 17 findet die Bildung einer Unschärfe statt. Gegebenenfalls kann auch über zusätzliche Signalleitungen, wie mit Linie 9 angedeutet, aus den Signalen U, I eine direkte Detektion von Störgrößen durchgeführt werden. Weiterhin können dem Detektor 17 über eine Leitung 19 Informationen von anderen Schutzgeräten zugeführt werden (Vergleichsschutz).

In einem Auslöseglied 21 erfolgt die Auslöseentscheidung und Bildung eines Aus-Signals. Im Falle einer Impedanzunschärfe wird hier das Einhalten eines vorgegebenen Grenzpolygons überwacht. Bei nicht hinreichenden Auslösebedingungen erhalten dann die veränderlichen Filter 12, 14 und 3 über die Signalwege 7a, 7b ein Steuersignal, was zu einer Verbesserung der Meßgenauigkeit für die Impedanz Z und zu einer Verringerung der Unschärfe führt. Bevorzugt findet in der Auslöselogik 5 zur Bildung des Unschärfebereichs und zur Auslösung eine Anwendung einer Fuzzy-Logik statt. Die Bewertung oder Gewichtung des gemessenen Signals führt zu einer einerseits schnelleren und andererseits genaueren Auslöseentscheidung. Eine maximale Selektivität des Schutzgeräts ist die Folge. Im folgenden werden nähere Ausführungen zu speziell möglichen Ausgestaltungen der einzelnen Bausteine des Schutzgerätes gemacht.

### Zum Meßwertfilter 11

Es werden zunächst aus den Zeitverläufen des Stroms i und der Spannung u die komplexen Zeiger mit modifizierten linearphasigen Fourieraufbaufiltern gebildet. Dies geschieht beginnend mit einer minimalen Stützstellenzahl von 3 im Stromfilter 14 und 7 im Spannungsfilter 12. Die Erhöhung der Stützstellenzahl erfolgt automatisch. Die Linearphasigkeit der eingesetzten Filter hat den Vorteil, daß wegen der daraus resultierenden Symmetrie der Filtekoeffizenten jede Faltung mit der Hälfte der Rechenoperation auskommt. Der Versatz der Stützstellen im Strom- und Spannungspfad kann dazu benutzt werden, um das aperiodische Glied im Kurzschlußstrom mit dem Exponentialfilter 13 zu unterdrücken. Dieser Anteil könnte sonst im Detektor 17 als Störgröße erkannt werden, was zu einer Verzögerung des AusKommandos führen würde.

Bei neu einlaufenden Abtastwerten nach Fehlereintritt oder Generalanregung wird über den Signalweg 7a der Grad der modifizierten Fourierfilter solange erhöht, bis alle Störgrößen genügend gedämpft sind und im Auslöseglied 21 eine sichere Entscheidung getroffen werden kann, die mit größter Wahrscheinlichkeit die richtige ist. Durch eine leichte Modifikation von bekannten Fourierfiltern kann eine möglichst große Dämpfungsänderung bei Störgrößen während des Aufbaus der Filter für die störgrößenabhängige Fuzzy-Regelung erzielt werden.

### Zum Impedanzbildner 15

Im Impedanzbildner 15 wird die Bestimmung der Resistanz und der Reaktanz der Leitung bis zur Fehlerstelle durchgeführt. Die Reaktanz kann von Netzfrequenz auf Nennfrequenz korrigiert werden.

### Zum Filter 3

Untersuchungen haben gezeigt, daß eine Tiefpaßfilterung der Impedanzen durch Rechteck- oder Hamming-Aufbaufilter zu besten Ergebnissen führt, was seine Berechtigung darin findet, daß ein stehender Kurzschluß zu einer konstanten Leitungsreaktanz führen muß. Der Einfluß wandernder Kurzschlüsse wird hierdurch nur etwas geglättet.

### Zum Detektor 17

Aus den Änderungen der Leitungsreaktanz (und der Resistanz) während des Filteraufbaues im Meßwertfilter 11 und dem Filter 3 wird die Unschärfe abgeleitet (Fuzzy-Glied). An dieser Stelle des Regelkreises können auch Meßdaten vom gegenüberliegenden Relais, z.B. zur verbesserten Fehlerortung, berücksichtigt werden. Gegebenenfalls kann dieser Verfahrensschritt auch im Auslöseglied 21 ausgeführt sein. Zusätzlich können mit Methoden der Mustererkennung Störgrößen oft schon in den Eingangsignalen u und i, oder in den gefilterten Signalen U und I erfaßt werden, was zu einer frühzeitigen Anpassung der Filterfunktionen an die Störgrößen führt.

### Zum Auslöseglied 21

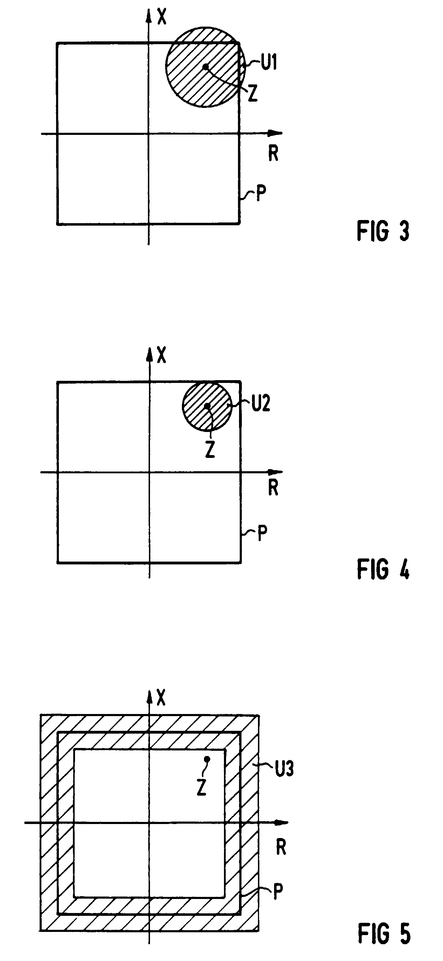

Hier wird im wesentlichen die Wahrscheinlichkeit der Aussage "Endwert der Meßwertimpedanz liegt innerhalb des Auslösepolygons der Zone x" bestimmt. Ist die Wahrscheinlichkeit kleiner "1" (siehe auch FIG 3, 4 und 5), so werden die Filter zur besseren Störgrößenunterdrückung weiter aufgebaut. Erst wenn die Wahrscheinlichkeit gleich "1" wird, erfolgt die Bildung des Aus-Kommandos. Bei störgrößenarmen Signalen wird die Wahrscheinlichkeit schon bei geringerer Fensterbreite der Filter zu "1". Es kann also sehr schnell und sicher das Aus-Kommando gebildet werden. Bei störgrößenreichen Signalen und Kurzschlüssen nahe dem Auslösepolygon wird die Wahrscheinlichkeit 1 erst bei größerer Fensterbreite erreicht.

FIG 3 zeigt ein von vorgegebenen Grenzen gebildetes Auslösepoligon P, auf dem eine Impedanz Z mit einem Unschärfebereich U1 abgebildet ist. Der Unschärfebereich U1 liegt noch nicht ganz im Auslösepolygon P. Eine Auslösung erfolgt daher noch nicht, da die Möglichkeit besteht, daß die tatsächliche Impedanz bis zur Kurzschlußstelle außerhalb des Auslösepolygons P liegt.

FIG 4 zeigt einen Zustand, der nach einer Verbesserung der Filter - anschließend an die Situation nach FIG 3 oder auch zu Beginn eines Meßvorgangs - liegen kann. Trotz eines Unschärfebereichs U2 kann eine genaue Entscheidung über den Fehlerfall getroffen werden, da der gesamte Unschärfebereich U2 innerhalb des Auslösepolygons P liegt.

FIG 5 zeigt dazu eine äquivalente Ausführung, bei der der Unschärfebereich U3 in das Auslösepoligon P verlegt ist. Die Verfahrensweise ist sinngemäß zu der oben beschriebenen anzuwenden.

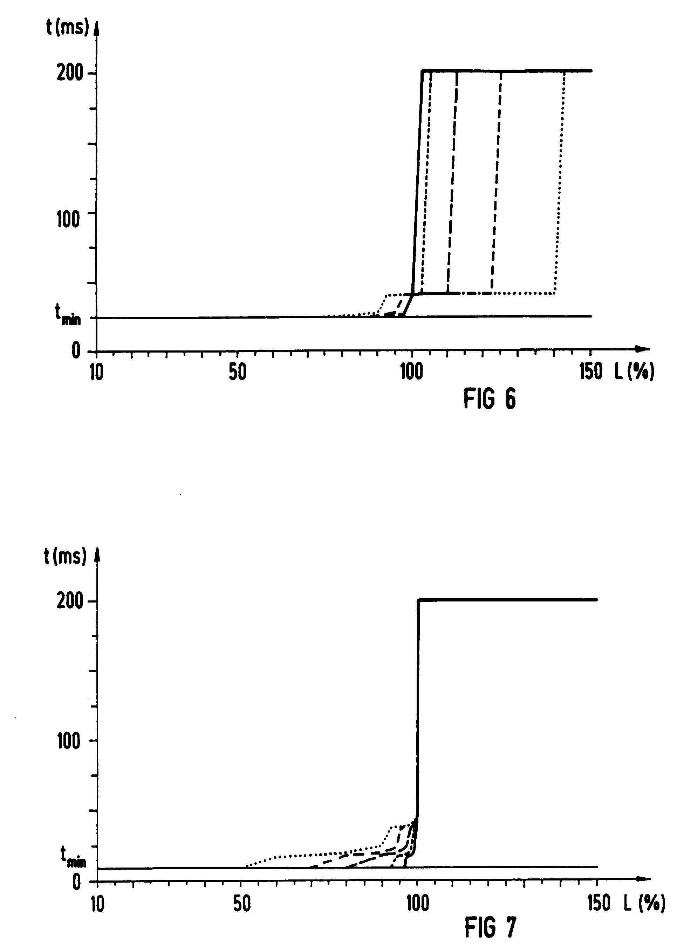

FIG 6 zeigt einen Kommandozeitverlauf eines Distanzschutzgerätes nach dem Stand der Technik bei Störung der Meßspannung durch unterschiedliche Störpegel (Harmonische). Die verschiedenen Fehlerfälle sind eingezeichnet. Es ist erkennbar, daß das Gerät eine Mindestauslösezeit tₘᵢₙ benötigt. Im hinteren Bereich (größer 100 %) der gezeigten Kurven tritt zusätzlich eine Ungenaugikeit in der Distanzbestimmung sowie eine unselektive Auslösung auf.

In der Darstellung gemäß FIG 7 ist die Auslösung nach dem vorgeschlagenen Verfahren aufgezeigt. Die Mindestauslösezeit tₘᵢₙ ist erheblich verringert. Im hinteren Bereich der Kurve ist eine erhebliche Verbesserung in der Distanzbestimmung festzustellen. Eine unselektive Auslösung ist praktisch ausgeschlossen. Lediglich im mittleren Bereich sind noch kleine Unterschiede bei verschiedenen Fehlern erkennbar. Die erzielten Ergebnisse sind jedoch in jedem Fall besser als beim Stand der Technik.

Das vorgeschlagene Verfahren und die dazugehörige Einrichtung läßt selbstverständlich auch Umgestaltungen im Rahmen des fachmännischen Könnens zu. Beispielsweise ist eine Anwendung allgemein bei Meßwertverarbeitungen oder auch beim Überstromzeitschutz denkbar. Die bevorzugte Anwendung findet jedoch beim digitalen Distanzschutz statt, bei dem Mikrorechner und digitale Filter, die als Programm ausgeführt sind, verwendet werden. Die Abkehr von fest vorgegebenen Grenzen zu einer Wahrscheinlichkeitsbetrachtung zur Bildung eines Auslösekommandos führt zu erheblich verbesserten Schutzeigenschaften.

## Patentansprüche

1. Schutzauslöseverfahren, mit folgenden Schritten:
a) es wird zumindest ein Signal einer Filtervorrichtung (3,16) zugeführt, welche eine zeitvariant vorgebbare Stützstellenzahl aufweist,
b) ausgehend von einer ersten Stützstellenzahl wird diese schrittweise erhöht,
c) es erfolgt eine Auslösung, wenn das Ausgangssignal (SA,Z) der Filtervorrichtung (3,16) innerhalb eines Auslösebereichs (P) mit vorgebbaren Grenzen liegt,
**dadurch gekennzeichnet**, daß
e) von dem Ausgangssignal (SA,Z) ein Unscharfebereich (U1,U2,U3) abgeleitet wird,
f) daß die Auslösung gemäß Schritt c) in Abhängigkeit davon erfolgt, ob der Unschärfebereich (U1,U2,U3) innerhalb des Auslösebereichs (P) liegt,
g) bei nicht hinreichenden Bedingungen für die Auslösung wird die Stützstellenzahl um einen Schritt erhöht, wonach sich Schritt f) nochmals anschließt.

2. Schutzauslöseverfahren nach Anspruch 1, wobei zur Bildung des Unschärfebereichs (U1,U2,U3) die zeitliche Änderung des Ausgangssignals (SA,Z) dient.

3. Schutzauslöseverfahren nach Anspruch 1 oder 2, wobei der Unscharfebereich (U1,U2,U3) in Abhängigkeit von der Filtereigenschaft und/oder einer Störgrößenhöhe gebildet wird.

4. Schutzauslöseverfahren nach einem der Ansprüche 1 bis 3, wobei die Filtervorrichtung (3,16) ein Aufbaufilter, insbesondere ein FIR-Filter, mit vorgebbarer Stützstellenzahl aufweist und wobei die Verbesserung der Filtereigenschaften durch Erhöhung der Stützstellenzahl erfolgt.

5. Schutzauslöseverfahren nach einem der Ansprüche 1 bis 4, wobei zur Bildung des Unschärfebereichs (U1,U2,U3) ein Fuzzy-logic-Verfahren dient.

6. Signalüberwachungsvorrichtung mit einer Filtervorrichtung (3,16) für ein Signal, wobei die Filtervorrichtung (3,16) zumindest ein Filter (3) mit zeitvariant vorgebbarer Stützstellenzahl, die schrittweise erhöhbar ist, und eine nachgeschaltete Auslöselogik (5) umfaßt, in der ein Auslösesignal erzeugt wird, wenn das Ausgangssignal (SA,Z) des Filters (3) innerhalb eines Auslösebereichs (P) mit vorgebbaren Grenzen liegt, **dadurch gekennzeichnet**, daß vom Ausgangssignal (SA,Z) des Filters (3) ein Unschärfebereich (U1,U2,U3) abgeleitet wird, der in der Auslöselogik (5) mit dem Auslösebereichs (P) verglichen wird, und bei nicht hinreichenden Bedingungen für die Auslösung die Stützstellenzahl des Filters (3) erhöht wird, wonach sich für die Erzeugung des Auslösesignals ein erneuter Vergleich des Unschärfebereichs (U1,U2,U3) mit dem Auslösebereich (P) anschließt.

7. Signalüberwachungsvorrichtung nach Anspruch 6, wobei in der Auslöselogik (5) von der zeitlichen Änderung des Ausgangssignals (SA,Z) der Unschärfebereich (U1,U2,U3) abgeleitet wird.

8. Signalüberwachungsvorrichtung nach Anspruch 6 oder 7, wobei die Filtervorrichtung (3,16) zumindest ein Aufbaufilter, insbesondere ein FIR-Filter, mit vorgebbarer Stützstellenzahl aufweist, und wobei zur Verbesserung der Filtereigenschaft eine Erhöhung der Stützstellenzahl erfolgt.

9. Signalüberwachungsvorrichtung nach Anspruch 7 oder 8, wobei zur Verbesserung der Filtereigenschaft eine Umschaltung von einem ersten auf einen zweiten Filtertyp erfolgt.

10. Signalüberwachungsvorrichtung nach einem der Ansprüche 7 bis 9, wobei zur Bildung des Unschärfebereichs (U1,U2, U3) ein Fuzzy-Glied dient.

11. Signalüberwachungsvorrichtung nach einem der Ansprüche 7 bis 10, wobei die Auslöselogik (5) eine Schnittstelle (19) zum Datenaustausch mit weiteren Vorrichtungen aufweist.

## Claims

1. Protection triggering process, having the following steps:
a) at least one signal is supplied to a filter device (3, 16) which has a number of supporting points which can be specified in time-variant manner,
b) proceeding from a first number of supporting points it is gradually increased,
c) a triggering takes place if the output signal (SA,Z) of the filter device (3, 16) lies within a triggering region (P) with specifiable limits,
characterized in that
e) a fuzzy region (U1,U2,U3) is derived from the output signal (SA,Z),
f) the triggering according to step c) takes place in dependence upon whether the fuzzy region (U1,U2,U3) lies within the triggering region (P),
g) with inadequate conditions for the triggering the number of supporting points is increased by one step, succeeded by step f) again.

2. Protection triggering process according to claim 1, whereby the temporal change of the output signal (SA,Z) is used to form the fuzzy region (U1,U2,U3).

3. Protection triggering process according to claim 1 or 2, whereby the fuzzy region (U1,U2,U3) is formed in dependence upon the filter property and/or a disturbance level.

4. Protection triggering process according to one of claims 1 to 3, whereby the filter device (3,16) has an assembly filter, in particular a FIR-filter, with a specifiable number of supporting points and whereby the improvement of the filter properties takes place by increasing the number of supporting points.

5. Protection triggering process according to one of claims 1 to 4, whereby a fuzzy logic process is used to form the fuzzy region (U1,U2,U3).

6. Signal monitoring device having a filter device (3, 16) for a signal, whereby the filter device (3, 16) comprises at least one filter (3) with a number of supporting points which can be specified in a time-variant manner, which number can be gradually increased, and a subsequently connected triggering logic unit (5), in which a triggering signal is generated when the output signal (SA,Z) of the filter (3) lies within a triggering region (P) with specifiable limits, characterized in that a fuzzy region (U1,U2,U3) is derived from the output signal (SA,Z) of the filter (3), which region is compared in the triggering logic unit (5) with the triggering region (P), and with inadequate conditions for the triggering the number of supporting points of the filter (3) is increased, succeeded by a renewed comparison of the fuzzy region (U1,U2,U3) with the triggering region (P) for the generation of the triggering signal.

7. Signal monitoring device according to claim 6, whereby in the triggering logic unit (5) the fuzzy region (U1,U2,U3) is derived from the temporal change of the output signal (SA,Z).

8. Signal monitoring device according to claim 6 or 7, whereby the filter device (3,16) has at least one assembly filter, in particular a FIR-filter, with a specifiable number of supporting points, and whereby an increase of the number of supporting points takes place in order to improve the filter property.

9. Signal monitoring device according to claim 7 or 8, whereby a change-over takes place from a first filter type to a second filter type in order to improve the filter property.

10. Signal monitoring device according to one of claims 7 to 9, whereby a fuzzy element is used to form the fuzzy region (U1,U2,U3).

11. Signal monitoring device according to one of claims 7 to 10, whereby the triggering logic unit (5) has an interface (19) for data exchange with additional devices.

## Revendications

1. Procédé de déclenchement de protection, comportant les étapes suivantes :
a) on envoie au moins un signal à un dispositif (3,16) de filtrage, qui comporte un nombre de points d'interpolation pouvant être prescrit de manière variable dans le temps,
b) on augmente ces nombres en partant d'un premier nombre de points d'interpolation,
c) on effectue un déclenchement, lorsque le signal (SA,Z) de sortie du dispositif (3,16) de filtrage se trouve dans une zone (P) de déclenchement ayant des limites pouvant être prescrites,
caractérisé en ce que
e) on obtient à partir du signal (SA,Z) de sortie une zone (U1,U2,U3) floue,
f) on effectue le déclenchement suivant l'étape c) selon que la zone (U1,U2,U3) floue se trouve ou non dans la zone (P) de déclenchement,
g) lorsque les conditions pour le déclenchement ne sont pas suffisantes, on augmente d'un pas le nombre de points d'interpolation, puis on effectue encore une fois l'étape f).

2. Procédé de déclenchement de protection suivant la revendication 1, dans lequel on utilise la variation du signal (SA,Z) de sortie en fonction du temps pour former la zone (U1,U2,U3) floue.

3. Procédé de déclenchement de protection suivant la revendication 1 ou 2, dans lequel on forme la zone (U1,U2, U3) floue en fonction de la propriété de filtrage et/ou d'une intensité d'une perturbation.

4. Procédé de déclenchement de protection suivant l'une des revendications 1 à 3, dans lequel le dispositif (3,16) de filtrage est un filtre de synthèse, notamment un filtre à réponse impulsionnelle finie, comportant un nombre de points d'interpolation pouvant être prescrit et on effectue l'amélioration des propriétés du filtre en augmentant le nombre de points d'interpolation.

5. Procédé de déclenchement de protection suivant l'une des revendications 1 à 4, dans lequel on utilise un procédé à logique floue pour former la zone floue (U1,U2,U3).

6. Dispositif de contrôle d'un signal comportant un dispositif (3,16) de filtrage d'un signal, le dispositif de filtrage (3,16) comprenant au moins un filtre (3) ayant un nombre de points d'interpolation pouvant être prescrits de manière variable dans le temps et pouvant être augmentés par pas, et un dispositif (5) logique de déclenchement branché en aval, dans lequel est produit un signal de déclenchement, lorsque le signal (SA,Z) de sortie du filtre (3) se trouve dans une zone (P) de déclenchement ayant des limites pouvant être prescrites, caractérisé en ce qu'il est obtenu par le signal (SA,Z) de sortie du filtre (3) une zone floue (U1,U2,U3), qui est comparée, dans le dispositif logique (5) de déclenchement, à la zone (P) de déclenchement et, le nombre de points d'interpolation du filtre (3) est augmenté lorsque les conditions pour le déclenchement ne sont pas suffisantes, une nouvelle comparaison de la zone floue (U1,U2,U3) à la zone (P) de déclenchement s'effectuant ensuite pour la production du signal de déclenchement.

7. Dispositif de contrôle d'un signal suivant la revendication 6, dans lequel il est obtenu, dans le dispositif logique (5) de déclenchement, par la variation dans le temps du signal (SA,Z) de sortie, la zone (U1,U2,U3) floue.

8. Dispositif de contrôle d'un signal suivant la revendication 6 ou 7, dans lequel le dispositif (3,16) de filtrage comporte au moins un filtre de synthèse, notamment un filtre à réponse impulsionnelle finie, comportant un nombre de points d'interpolation pouvant être prescrits, et une augmentation du nombre de points d'interpolation étant effectuée pour améliorer la propriété du filtre.

9. Dispositif de contrôle d'un signal suivant la revendication 7 ou 8, dans lequel il s'effectue, pour améliorer la propriété du filtre, une commutation d'un premier type de filtre à un second type de filtre.

10. Dispositif de contrôle d'un signal suivant l'une des revendications 7 à 9, dans lequel il est utilisé pour la formation de la zone floue (U1,U2,U3) un élément à logique floue.

11. Dispositif de contrôle d'un signal suivant l'une des revendications 7 à 10, dans lequel le dispositif logique (5) de déclenchement comporte une interface (19) pour l'échange des données avec d'autres dispositifs.
